# EUROPEAN PATENT SPECIFICATION

(11) **EP 1 241 552 B1**
(45) Date of publication and mention of the grant of the patent: **16.08.2006**
(21) Application number: 02001863.6
(22) Date of filing: 28.01.2002
(51) Int. Cl.: G05G 1/14, B60T 7/04

(54) **A pedal for motor vehicles with adjustable longitudinal position**
Pedal für Kraftfahrzeug mit justierbarer, longitudinaler Position
Pédale pour véhicule à moteur avec position longitudinale réglable

(30) Priority: 13.03.2001 IT TO010228
(43) Date of publication of application: 18.09.2002
(73) Proprietor: I.M.A.M. S.p.A., 10040 Volvera (TO) (IT)
(72) Inventor: Cavaglia', Renato, 10040 Volvera (Torino) (IT)
(74) Representative: Di Francesco, Gianni

(56) References cited:
- DE-A- 3 427 416
- US-A- 3 643 525
- US-A- 5 697 260
- US-A- 5 890 399

## Description

The present invention refers to an adjustable pedal for motor vehicles. More in particular the invention refers to a device intended to adjust the longitudinal position of a pedal for motor vehicles, so that drivers of any height may feel comfortable while driving.

Motor vehicles are generally provided with pedals adapted to control acceleration, braking and engagement of the clutch.

Said pedals generally consist of an arm which is rotatably supported by a bracket which is placed at floor level, a connection means between the accelerator, the brakes or the clutch and the arm of the pedal, and a footboard connected to end of the arm of the pedal which is not articulated in order to allow the driver to push the arm itself.

Adjustment of the position of the pedals becomes necessary in order to achieve the best possible driving position for drivers of different height. In order to adjust the driving position, the driver seat is generally moved yet, should the driver be tall, this solution implies that the space for passengers sitting on the backseat is reduced. In order to overcome this drawback, pedals have been produced the position of which can be adjusted in the longitudinal direction of the motor vehicle. Said devices are known, for example, from patent US 3,643,524, EP 0,363,546 or from US 5890399.

However, the devices shown in said patents are quite complex, and the sliding systems for the arm of the pedal need high smoothness and therefore continuous maintenance in order to ensure efficiency. This leads to an increase in general maintenance costs.

It is therefore and object of the present invention to achieve a device intended to adjust the longitudinal position of the motor vehicle thus overcoming the aforementioned drawbacks.

Said object is achieved by means of a device adapted to adjust the longitudinal position of a pedal of a motor vehicle, presenting the characteristics set forth in claim 1.

The present invention will become more clear from the following detailed description referring to the appended drawings of a preferred embodiment, provided as non restrictive illustration of the invention, and in which:

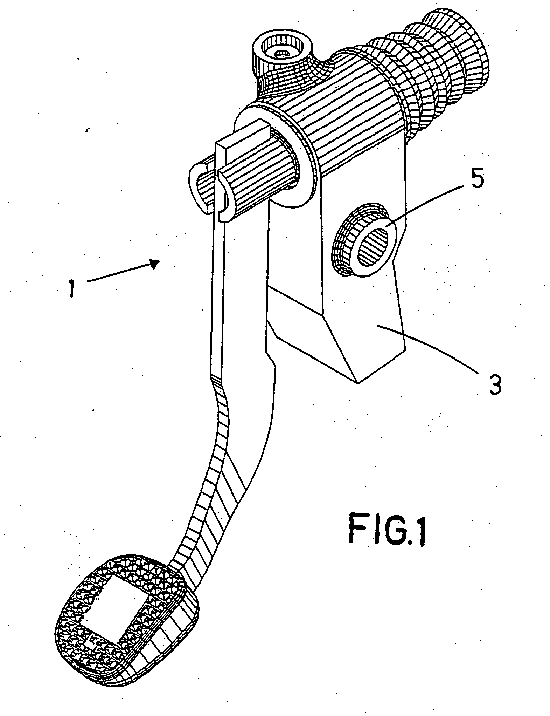

- figure 1 is a perspective view of a pedal for motor vehicles provided with the position-adjusting device according to the invention,

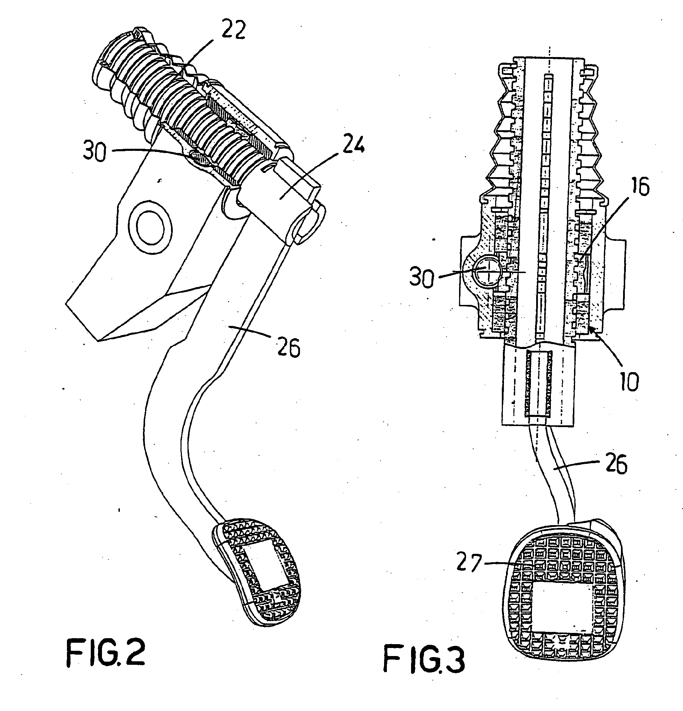

- figure 2 is a perspective view of the pedal in figure 1, the adjusting device being partially sectioned;
- figure 3 is a top view of the pedal in figure 1, the adjusting device being partially sectioned;

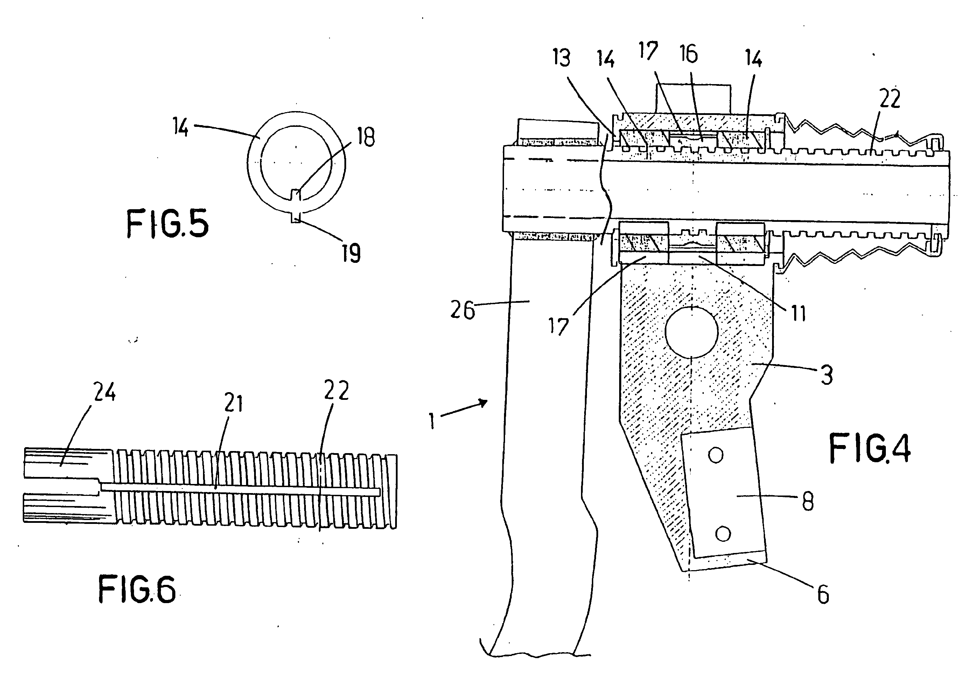

- figure 4 is a side view of part of the pedal in figure 1 and the sectioned adjusting pedal, and
- figures 5 and 6 are front and side views respectively of the device according to the invention.

With reference to the figures, reference number 1 indicates a pedal for motor vehicles provided with a device adapted to adjust its longitudinal position along the main axis of the motor vehicle.

This device generally includes a lever 3 - preferably a metal lever - which is pivoted by means of the bush 5 on a axis of rotation (not shown) supported on a part fixed to the bodywork at a place which is under the dash panel. The lower end 6 of the lever 3 is provided with attachments 8 intended to connect it, for example by means of a cap (not shown), to one of the controls of the motor vehicle, for example to the pump of the hydraulic braking system, or to the clutch.

At its upper end, the lever 3 is provided with a cylindrical through hole 10, provided at its lower part with a radial groove 11 running all along its length. At the one end of the through hole there is a part presenting a reduced diameter forming a counterboring 13 against which lays the first one of the two metal sliding bushes 14, presenting a cylindrical ring section, inserted into the hole 10 and kept in position by means of a locking ring. The bushes 14 are separated by a metal ring threaded lead 16 kept in position by means of a distance ring 17 made of anti-friction material. They present two opposite radial ribs, an internal rib 18 and an external rib 19. The external rib 19 is adapted to be inserted into the groove 11, in order to prevent the rotation between the bushes 14 and the lever 3. The internal rib 18 is inserted into a radial notch 21 made into a metal screw 22 the diameter of which is such that it is inserted into the bushes 14 and the thread of which is such that it becomes engaged with the thread of the lead 16 thus making it rotate as a consequence of its translation movement inside the bushes 14 (the rotation of the screw 22 being prevented by the internal rib 18 of the bushes 14). The screw 22, the length of which is proportioned to the adjustment that is to be achieved, is provided at one of its ends with a bracket 24 which, when used, protrudes from the front part of the lever 3 and to which is welded, or otherwise fixed, the arm 26 of the pedal 1 of the brake at the upper end opposite to the end supporting the footboard 27. The part of the screw protruding from the rear part of the lever 3 is covered by an accordion-like protection anti-dust made of elastic material.

The external wall of the lead 16, is provided with a thread to be coupled, by means of an adequate opening made on the wall of the distance ring 17, with the one of a worm screw 30 housed into a seat made on the lever 3. Said worm screw 30 is coupled, by means of a flexible transmission, with a movement generator, such as an electrical motor (none of them being shown), adapted to make it rotate in both directions.

The device according to the present invention works as follows.

The adjustment of the position of the footboard 27 of the pedal 1 in relationship to the lever 3, and therefore the adjustment of the longitudinal position of the pedal inside the passenger compartment, will be achieved by operating, by means of flexible transmission, the worm screw 30, in order to screw or unscrew it so that the screw 22 can translate forward or backward inside the bushes 14. The screw 30 becomes engaged with the lead 16 which, in turn, becomes engaged with the screw 22 and makes it translate as a consequence of its rotation since the screw 22 cannot rotate being it retained by the ribs 18 and 19 of the bushes 14. The translation makes the pedal 1 move longitudinally inside the passenger compartment.

The shape and connection points of the component parts of the structure can be modified, and the worm screw 30 can be substituted by any other equivalent means without going beyond the scope of the present invention as set forth in the appended claims.

## Claims

1. Device to adjust the longitudinal position of a pedal in a motor vehicle consisting of an arm (26) provided with a footboard (27) at one end, including a lead coupling engaging a screw (22) and a wom screw (30) engaging the lead coupling (10) the movement of which is controlled by the driver, **characterised in that** the end of the arm (26) which is not provided with the footboard is integral with said screw (22) and adapted to translate into a cylindrical seat (10) made at the end of a lever (3) centrally rotatably supported (5) on a fixed part of the motor vehicle and connected at the other end to the operating means of at least one of the controls of the motor vehicle.

2. Device as claimed in claim 1 **characterised in that** the lead (16) is a ring provided with both an internal thread adapted to become engaged with the screw (22), and an external thread adapted to become engaged with the worm screw (30).

3. Device as claimed in claim 1 **characterised in that** inside the cylindrical seat (10) there are placed two sliding ring bushes (14) which are separated by said lead and the hole of which presents a diameter which is basically the same as the diameter of the screw (22) which is adapted to translate inside them.

4. Device as claimed in claim 1 and claim 3, **characterised in that** the bushes (14) are provided with two opposite radial ribs an internal rib and an external rib, adapted to become engaged with a groove (21) made in the screw (22) and a groove (11) made in the cylindrical seat (10) respectively, in order to prevent the bushes from rotating in relationship to the seat and the screw from rotating in relationship to the bushes.

5. Device as claimed in claim 1 **characterised in that** the end of the screw (22) integral with the arm of the lever protrudes frontally from the lever (3).

6. Device as claimed in claim 1 **characterised in that** the length of the screw (22) is directly proportional to the adjustment that is to be achieved.

## Patentansprüche

1. Vorrichtung, um die Längsposition eines Pedals in einem Kraftfahrzeug einzustellen, welches aus einem Arm (26) besteht, der mit einem Fußbrett (27) an einem Ende vorgesehen ist, welches eine Führungskupplung, die eine Schraube (22) in Eingriff hält, und eine Wurmschraube (30) aufweist, die mit der Führungskupplung (16) in Eingriff steht, deren Bewegung durch den Fahrer gesteuert wird, **dadurch gekennzeichnet, dass** das Ende des Arms (26), welches nicht mit dem Fußbrett ausgestattet ist, einstückig mit der Schraube (22) ausgebildet und ausgelegt ist, sich in eine zylindrische Aufnahme (10) zu verschieben, die am Ende eines Hebels (3) hergestellt ist, der auf einem feststehenden Teil des Kraftfahrzeugs mittig drehbar getragen (5) ist und am anderen Ende mit dem Betätigungsmittel von wenigstens einer der Steuerungen des Kraftfahrzeugs verbunden ist.

2. Vorrichtung gemäß Anspruch 1, **dadurch gekennzeichnet, dass** die Führung (16) ein Ring ist, welcher sowohl mit einem Innengewinde, das ausgelegt ist, um mit der Schraube (22) in Eingriff zu stehen, als auch mit einem Außengewinde vorgesehen ist, das ausgelegt ist, um mit der Wurmschraube (30) in Eingriff zu stehen.

3. Vorrichtung gemäß Anspruch 1, **dadurch gekennzeichnet, dass** innerhalb der zylindrischen Aufnahme (10) zwei gleitende Ringbuchsen (14) angeordnet sind, welche mittels der Führung getrennt sind und deren Loch einen Durchmesser bietet, welcher im wesentlichen gleich dem Durchmesser der Schraube (22) ist, welche ausgelegt ist, um sich in ihnen zu verschieben.

4. Vorrichtung gemäß Anspruch 1 und Anspruch 3, **dadurch gekennzeichnet, dass** die Buchsen (14) mit zwei gegenüberliegenden radialen Rippen, einer inneren Rippe und einer äußeren Rippe, ausgestattet sind, welche ausgelegt sind, um mit einer Nut (21), welche in der Schraube (22) ausgebildet ist, beziehungsweise mit einer Nut (11), welche in der zylindrischen Aufnahme (10) ausgebildet ist, in Eingriff zu gelangen, um zu verhindern, dass sich die Buchsen in Bezug zur Aufnahme drehen und die Schraube sich in Bezug zu den Buchsen dreht.

5. Vorrichtung gemäß Anspruch 1, **dadurch gekennzeichnet, dass** das Ende der Schraube (22), welches einstückig mit dem Arm des Hebels ist, frontal von dem Hebel (3) vorragt.

6. Vorrichtung gemäß Anspruch 1, **dadurch gekennzeichnet, dass** die Länge der Schraube (22) direkt proportional zu der Justage ist, die erzielt werden soll.

## Revendications

1. Dispositif de réglage de la position longitudinale d'une pédale dans un véhicule à moteur, comprenant un bras (26) muni d'une plaque de pied (27) à une première extrémité, comprenant un accouplement de guidage engageant une vis (22) et une vis sans fin (30) engageant l'accouplement à guide (16) dont le mouvement est commandé par le conducteur, **caractérisé en ce que** l'extrémité du bras (26) qui n'est pas munie de la plaque de pied est solidaire de ladite vis (22) et est conçue pour effectuer une translation à l'intérieur d'un siège cylindrique (10) réalisé à l'extrémité d'un levier (3) supporté au centre avec possibilité de rotation (5) sur une partie fixe du véhicule à moteur et relié à l'autre extrémité au moyen d'actionnement d'au moins l'une des commandes du véhicule à moteur.

2. Dispositif selon la revendication 1, **caractérisé en ce que** le guide (16) est un anneau muni à la fois d'un filetage interne conçu pour s'engager avec la vis (22) et d'un filetage externe conçu pour s'engager avec la vis sans fin (30).

3. Dispositif selon la revendication 1, **caractérisé en ce que**, à l'intérieur du siège cylindrique (10) sont disposées deux douilles annulaires coulissantes (14) qui sont séparées par ledit guide, et dont l'alésage présente un diamètre qui est fondamentalement identique au diamètre de la vis (22) qui est conçue pour effectuer une translation à l'intérieur de celle-ci.

4. Dispositif selon la revendication 1 et la revendication 3, **caractérisé en ce que** les douilles (14) sont munies de deux nervures radiales opposées, dont une nervure interne et une nervure externe, qui sont conçues pour s'engager avec une rainure (21) réalisée dans la vis (22), et une rainure (11) réalisée dans le siège cylindrique (10), respectivement, afin d'empêcher lesdites douilles de tourner par rapport au siège, et d'empêcher la vis de tourner par rapport aux douilles.

5. Dispositif selon la revendication 1, **caractérisé en ce que** l'extrémité de la vis (22) qui est solidaire du bras du levier dépasse vers l'avant à partir du levier (3).

6. Dispositif selon la revendication 1, **caractérisé en ce que** la longueur de la vis (22) est directement proportionnelle au réglage qui doit être obtenu.
